# EUROPÄISCHE PATENTANMELDUNG

(11) **EP 1 811 591 A1**
(43) Veröffentlichungstag der Anmeldung: **25.07.2007**
(21) Anmeldenummer: 06006817.8
(22) Anmeldetag: 31.03.2006
(51) Int. Cl.: H01M 2/20, H01M 2/34

(54) **Batterie**

(30) Priorität: 20.01.2006 DE 102006003114
(71) Anmelder: Torqeedo GmbH, 82319 Starnberg (DE)
(72) Erfinder: Böbel, Friedrich,, 82547 Eurasburg (DE)
(74) Vertreter: Gellner, Bernd

(57) **Zusammenfassung**

Die Erfindung betrifft eine Batterie (1) mit mehreren in Serie und / oder parallel geschalteten Batteriezellen (4) und zwei Batteriepolen (2, 3), wobei eine Sicherheitsschaltung (6, 7, 8, 9, 10, 11) vorgesehen ist, welche einen Widerstand (10) aufweist, der in die stromleitende Verbindung zwischen den Batteriezellen (4) und einem der Batteriepole (2, 3) schaltbar ist.

## Beschreibung

Die Erfindung betrifft eine Batterie mit mehreren in Serie und / oder parallel geschalteten Batteriezellen und mit zwei Batteriepolen. Ferner bezieht sich die Erfindung auf ein Verfahren zum Zusammenschalten von zwei oder mehr solcher Batterien.

Eine Lithium-Mangan-Zelle hat beispielsweise eine Kapazität von 1,6 Ah bei einer Nennspannung von 3,7 V. Je nach Anwendungsgebiet müssen daher in der Praxis mehrere Lithium-Mangan-Zellen parallel und seriell zu einer Batterie zusammengeschaltet geschaltet werden, um eine gewünschte Sollspannung an den Batteriepolen und eine gewünschte Kapazität zu erreichen.

Lithium-Mangan-Batterien sind besonders hochstromfest, das heißt, sie können auch hohe Ströme zur Verfügung stellen, ohne dass die Batteriespannung zusammenbricht. Lithium-Mahgan-Batterien reagieren elektrochemisch relativ träge, so dass selbst bei Fehlfunktionen keine kritischen Temperaturerhöhungen auftreten, die bei anderen Lithium-lonen-Akkus zum Teil Sicherheitsprobleme mit sich bringen können. Lithium-Mangan-Batterien sind daher grundsätzlich sicher.

Die Batteriespannung ist allerdings vom Ladezustand der Batterie abhängig: Mit fortschreitender Entladung der Batterie sinkt die Batteriespannung langsam ab. Werden zwei jeweils aus mehreren Lithium-Mangan-Zellen bestehende Batterien, die unterschiedlich stark geladen sind unf folglich unterschiedliche Klemmenspannungen aufweisen, parallel geschaltet, fließt zwischen den Batterien ein Ausgleichsstrom.

Lithium-Mangan-Batterien haben einen sehr geringen Innenwiderstand von etwa 1 mOhm. Unterscheiden sich daher bei der oben genannten Parallelschaltung zweier Batterien deren Batteriespannungen um beispielsweise 10 Volt, so fließt aufgrund des sehr geringen Innenwiderstands ein Ausgleichsstrom von 10000 A, der ein hohes Gefahrenpotential darstellen kann.

Bisher werden daher Batterien mit hochstromfähigen Lithium-Zellen, die mit Batterien des gleichen Typs zusammengeschaltet werden sollen, mit speziellen Ladegeräten präzise in einen definierten Ladezustand gebracht, so dass beim Verbinden zweier solcher Batterien kein oder nur ein sehr geringer Ausgleichsstrom fließt. Das Laden der Batterien wird dadurch sehr aufwändig und kann nur von Spezialisten durchgeführt werden.

Zudem können solche hochstromfähigen Batterien bisher aus Sicherheitsgründen nicht als separates Modul an Endverbraucher verkauft werden, da beispielsweise nicht auszuschließen ist, dass dieser zwei unterschiedlich stark geladene Batterien in unzulässigerweise zusammenschaltet.

Die Erfindung hat sich daher die Aufgabe gestellt, die Ausgleichsströme beim Zusammenschalten von zwei oder mehr Batterien zu begrenzen.

Insbesondere ist es Aufgabe vorliegender Erfindung, eine mehrere hochstromfähige Lithium- Zellen aufweisende Batterie zu entwickeln, wobei die oben genannten Probleme nicht auftreten. Ferner soll ein Verfahren zum Schutz einer solchen Batterie vor Fehlbedienungen aufgezeigt werden.

Diese Aufgabe wird durch eine Batterie der eingangs genannten Art gelöst, wobei eine Sicherheitsschaltung vorgesehen ist, welche einen Widerstand aufweist, der in die stromleitende Verbindung zwischen den Batteriezellen und einem der Batteriepole schaltbar ist.

Die erfindungsgemäße Batterie stellt eine Gleichstromversorgung dar, die allen gebotenen Sicherheitsanforderungen gerecht wird. Die erfindungsgemäße Sicherheitsschaltung gewährleistet, dass selbst bei Fehlbedienungen keinerlei sicherheitsbedenkliche Situationen auftreten. Die Batterie kann daher grundsätzlich auch von einem Laien an einen Stromverbraucher angeschlossen werden. Erst die Erfindung ermöglicht es damit, eine Lithium-basierende Hochleistungsbatterie auch als separates Modul, das heißt, nicht fest mit einem Stromverbraucher verbunden, an Endabnehmer zu vertreiben.

Ohne die erfindungsgemäße Sicherheitsschaltung können die eingangs erwähnten hohen Ausgleichsströme bei einem nicht sachgerechten Parallelschalten zweier Batterien auf Lithium-Basis auftreten. Zur Vermeidung dieser Ausgleichsströme ist in der Sicherheitsschaltung ein Widerstand vorgesehen, der zwischen die Batteriezellen und einen der Batteriepole schaltbar ist. Werden zwei so ausgerüstete Batterien mit unterschiedlicher Klemmenspannung parallel geschaltet, so schaltet die Sicherheitsschaltung erfindungsgemäß den Widerstand zwischen die Batteriezellen und einen der Batteriepole, da ansonsten, aufgrund des sehr geringen Innenwiderstands der Lithium-Zellen von etwa 1 mOhm, ein sehr hoher Ausgleichsstrom fließen würde.. Der Ausgleichsstrom fließt dann über den oder die Widerstände. Wird für diesen Widerstand zum Beispiel ein Wert von 100 Ohm gewählt, so fließt bei einer Spannungsdifferenz von 10 Volt ein unkritischer Strom von 100 mA. Ohne diesen Widerstand würde bei geschlossenem Schalter ein Ausgleichsstrom von 10000 A fließen.

Vorzugsweise ist in der Verbindungsleitung zwischen den Batteriezellen und einem der Batteriepole ein Schalter, insbesondere ein MOSFET, vorgesehen. Parallel zu diesem Schalter ist ein Widerstand geschaltet Im normalen Betrieb ist der Schalter geschlossen und der Strom fließt über den mit dem Schalter versehenen Leitungszweig. Übersteigt der fließende Strom einen vorgegebenen Wert, wie dies beispielsweise beim Zusammenschalten zweier Lithium-basierender Batterien mit unterschiedlicher Klemmenspannung passieren kann, so wird der Schalter automatisch geschlossen und der Strom fließt über den parallel geschalteten Widerstand.

Die Erfindung eignet sich für Batterien mit hochstromfähigen Batteriezellen, insbesondere Lithium-Zellen. Bevorzugt werden Lithium-Mangan-Zellen in der Batterie vorgesehen. Lithium-Mangan-Zellen besitzen eine sehr hohe Energiedichte, so dass eine gewünschte Batteriekapazität mit minimalen Batterievolumen und minimalem Batteriegewicht realisiert werden kann. Gegenüber anderen Lithium-basierenden Batteriesystemen erfüllen Lithium-Mangan-Batterien wesentlich höhere Sicherheitsstandards. In Verbindung mit der erfindungsgemäßen Sicherheitsschattung stellt die Erfindung damit ein sicheres Hochleistungs-Batteriemodul zur Verfügung.

Vorzugsweise umfasst die Sicherheitsschaltung eine Messeinrichtung zur Strommessung, einen Schalter und eine Steuereinrichtung, welche über eine Eingangssignalleitung mit der Einrichtung zur Strommessung und über eine Ausgangssignalleitung mit dem Schalter zusammenwirkt. Die Messeinrichtung ist vorzugsweise in die Batterie integriert und so geschaltet, dass diese einen Strom misst, der Rückschlüsse auf den über die Batteriepole fließenden Strom zulässt, insbesondere einen Strom, der proportional zu dem über die Batteriepole fließenden Strom ist. Der gemessene Stromwert wird über die Eingangssignalleitung an die Steuereinrichtung übermittelt, welche in Abhängigkeit von diesem Eingangssignal den Schalter ansteuert. Der Schalter unterbricht in geöffneter Stellung die stromleitende Verbindung zwischen den Batteriezellen und zumindest einem der Batteriepole, vorzugsweise dem Pluspol, während er in geschlossener Stellung den Stromfluss erlaubt.

Von Vorteil umfasst die Sichemeitsschattung auch eine Messeinrichtung zur Messung der Batteriespannung, die in analoger Weise mit der Steuereinrichtung verbunden ist, so dass bei Über-oder Unterschreiten vorgegebener Grenzspannungen der Schalter ebenfalls angesteuert und geöffnet werden Kann.

In einer bevorzugten Ausführung wird ständig der über die Batteriepole, in der Praxis der über den Pluspol der Batterie, fließende Strom gemessen. Dies kann beispielsweise dadurch erfolgen, dass in die Leitung zwischen den Batteriezellen und dem Pluspol ein Strommesswiderstand, ein sogenannter Shunt, geschaltet ist, und die über diesem Widerstand abfallende Spannung gemessen wird.

Wird bei dieser Messung ein vorgegebener Maximalstrom überschritten, so wird die stromleitende Verbindung zwischen zumindest einem der Batteriepole, in der Regel dem Pluspol, und den Batteriezellen unterbrochen. Dies kann bevorzugt dadurch erfolgen, dass ein in dieser stromleitenden Verbindungsleitung angeordneter Schalter, insbesondere ein MOSFET, geöffnet wird. Der Stromfluss wird dadurch unterbrochen.

Von Vorteil ist die Messeinrichtung so ausgeführt, dass diese außer dem über die Batteriepole fließenden Strom auch die Batteriespannung aufnehmen kann. Bei Über-oder Unterschreiten einer bestimmten, vorgegebenen Spannung wird in diesem Fall der Schalter ebenfalls von der Steuereinrichtung angesteuert und geöffnet, so dass der Stromfluss unterbrochen wird.

So ist es beispielsweise günstig, beim Laden der Batterie die zwischen den Batteriepolen anliegende Spannung zu messen und bei Überschreiten einer vorgegebenen Spannung die stromleitende Verbindung zwischen zumindest einem der Batteriepole, in der Regel dem Pluspol, und den Batteriezellen zu unterbrechen. Zum Beispiel wird bei der Verwendung von Lithium-Mangan-Zellen der Stromfluss von Vorteil dann unterbrochen, wenn die Spannung einen Wert überschreitet, der der Anzahl in Serie geschalteter Lithium-Mangan-Zellen multipliziert mit 4,2 V entspricht, um ein Überladen der Batterie zu vermeiden.

Bei Unterschreiten einer bestimmten Spannung können manche Batteriezellen beispielsweise Lithium-Zellen, zerstört werden. Von Vorteil wird daher die zwischen den Batteriepolen anliegende Spannung überwacht und bei Unterschreiten eines bestimmten Wertes die stromleitende Verbindung zwischen zumindest einem der Batteriepole und den Batteriezellen unterbrochen. Für Batterien mit Lithium-Mangan-Zellen hat es sich insofern bewährt, den Schalter zu öffnen, wenn die Spannung pro Zelle einen Wert von 2 Volt unterschreitet Sind zum Beispiel 7 Lithium-Mangan-Zellen jeweils in Serie geschaltet, um eine Nennspannung von 7 x 3,7 V = 25;9 V zu erzielen, so wird entsprechend eine Spannungsuntergrenze von 7 x 2 V = 14 V festgelegt Sinkt die Klemmenspannung der Batterie unter diesen Wert, so wird der Schalter automatisch geöffnet.

Die Erfindung bringt insbesondere bei frei zugänglichen, das heißt nicht fest in eine bestimmte Anlage oder Vorrichtung eingebauten, Batterien Vorteile. Bei solchen Batterien besteht die Gefahr, dass der Benutzer auch Verbraucher an die Batterie anschließt, für die die Batterie nicht ausgelegt ist.

Ohne die erfindungsgemäßen Sicherheitsmerkmale können insbesondere bei Lithium-basierenden Batterien, beispielsweise Batterien mit Lithium-Mangan-Zellen, ungewollt sehr hohe Ströme fließen. Insbesondere bei Batterien, die eine Kapazität von mehr als 200 Wh und mehr besitzen, bringt die Erfindung enorme Sicherheitsvorteile. Diese Vorteile sind bei großen Batterien mit mehr als 500 Wh, bevorzugt mehr als 1000 Wh Kapazität, von wesentlicher Bedeutung. Bevorzugt wird die Erfindung bei Batterien eingesetzt, die zwischen 4 und 12 in Serie geschaltete Lithium-Mangan-Zellen und mehr als 10 parallel geschaltete Lithium-Mangan-Zellen aufweist.

Die erfindungsgemäße Batterie eignet sich besonders zur Versorgung von Elektro-Bootsmotoren. Vor allem bei begrenztem Volumen und Gewicht im Boot ist die hohe Energiedichte von Lithium-Batterien ein entscheidender Vorteil. Wird der Elektromotor nur als Hilfsmotor oder nur bei speziellen Fahrten eingesetzt, so kann die erfindungsgemäße Batterie in einfacher Weise auch von Laien montiert oder demontiert werden. Als Versorgungssystem für Elektro-Bootsmotoren werden mit der Erfindung die Vorteile von Lithium-Batterien erreicht, nämlich hohe Energiedichte, hohe Stromfestigkeit, hohe Ladungsstabilität auch bei längerer Lagerung, bessere Leistung bei Kälte und, bei Verwendung von Lithium-Mangan-Batterien, hohe Sicherheitsstandards. Zusätzlich ermöglicht die Erfindung ein einfaches und sicheres Ein- und Ausbauen der Batterie, auch durch Nicht-Fachleute, was insbesondere beim Einsatz einer solchen Batterie zur Stromversorgung eines Boots-Hilfsantriebs von Vorteil ist.

Lithium-Mangan-Zellen werden bei Unterschreiten einer Grenzspannung von etwa 1 Volt unwiederbringlich zerstört Es ist daher von Vorteil, die stromleitende Verbindung zwischen den Lithium-Mangan-Zeilen.und mindestens einem der Batteriepole zu unterbrechen, wenn die Klemmenspannung unter einen bestimmten Wert abfällt. Bei der oben genannten Ausführungsform der Erfindung mit dem parallel zu einem Schalter geschalteten Widerstand ist es daher vorteilhaft, einen zweiten Schalter vorzusehen, um den Batteriepol komplett von den Lithium-Mangan-Zellen abtrennen zu können. Der zweite Schalter kann entweder in dem zu dem Schalter parallelen Zweig in Serie mit dem Widerstand angeordnet sein oder in Reihe mit der Parallelschaltung aus Schalter und dem Widerstand vorgesehen werden.

Die Erfindung bietet weiterhin Schutz gegen eine unsachgemäße Reihenschaltung zweier Lithium-Batterien. Wird eine voll geladene Lithium-Mangan-Zelle mit einer Klemmenspannung von 4,2 V mit einer nur noch teilweise geladenen Lithium-Mangan-Zelle mit einer Klemmenspannung von z.B. nur noch 2 V in Reihe geschaltet und ein Verbraucher angeschlossen, so kann sich die nur teilweise geladene Zelle bis zur Selbstzerstörung entladen.

Erfindungsgemäß wird daher die Klemmenspannung der Batterie überwacht und die stromleitende Verbindung zwischen den Lithium-Zellen und dem Batteriepol unterbrochen, wenn die Klemmenspannung zu stark absinkt und eine Zerstörung der

Batterie droht. Bei einer Serienschaltung zweier erfindungsgemäßer, ungleichmäßig geladener Batterien wird auf diese Weise der Stromfluss rechtzeitig unterbrochen, bevor die Lithium-Zellen einer der Batterien geschädigt werden. Es besteht dann gegebenenfalls noch die Möglichkeit, die entladene Batterie abzuklemmen und den elektrischen Verbraucher mit nur einer Batterie zu versorgen. ,

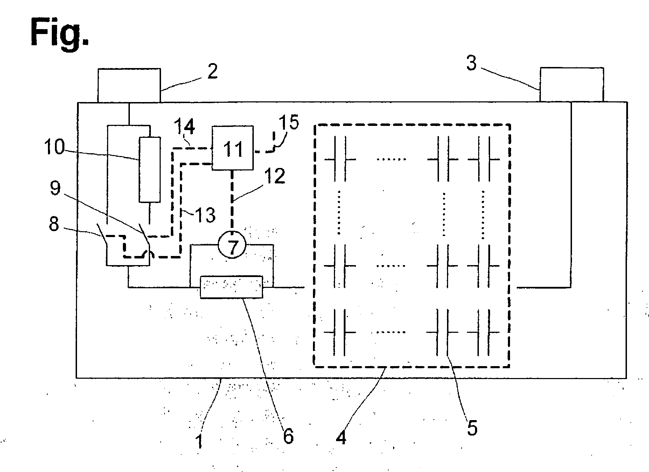

Die Erfindung sowie weitere Einzelheiten der Erfindung werden im Folgenden anhand von dem in der Zeichnung dargestellten Ausführungsbeispiel näher erläutert. Hierbei zeigt die
Figur eine erfindungsgemäße Batterie.

In der Figur ist eine Batterie 1 mit einem Pluspol 2 und einem Minuspol 3 dargestellt Die Batterie 1 umfasst einen Zellenblock 4 mit zum Teil in Reihe, zum Teil parallel geschalteten Lithium-Mangan-Zellen 5.

Zwischen dem Block 4 mit den Lithium-Mangan-Zellen 5 und dem Pluspol 2 ist erfindungsgemäß eine Sichefieitsschaltung vorgesehen. Hierzu ist einem Widerstand 6 ein Messgerät 7 parallel geschaltet, mit dem die über dem Widerstand 6 abfallende. Spannung, die proportional zu dem durch den Widerstand 6 fließenden Strom ist, gemessen werden kann.

In Reihe mit dem Widerstand 6 ist ein Schalter 8 vorgesehen, dem die Reihenschaltung eines zweiten Schalters 9 mit einem Widerstand 10 parallel geschaltet ist. Die Parallelschaltung aus dem Schalter 8 und dem zweiten Schalter 9 mit dem Widerstand 10 ist an den Pluspol 2 angeschlossen,

Weiter ist ein Controller 11 vorgesehen, der als Eingangssignal 12 den von dem Messgerät 7 bestimmten Spannungsabfall erhält. Der Controller 11 kann über eine Signalleitung 13 den Schalter 8 und über eine Signalleitung 14 den zweiten Schalter 9 ansteuern.

Der Controller 11 überwacht über den Spannungsabfall über dem Widerstand 6 ständig den von der Batterie 1 abgegebenen Strom. Solange dieser Strom einen vorgegebenen Wert nicht übersteigt, sendet der Controller 11 an den Schalter 8 ein Signal, um diesen in der Stellung "geschlossen" zu halten, so dass der Strom ungehindert über den Schalter 8 zum Pluspol 2 fließen kann.

Stellt der Controller 11 fest, dass der für die Stromstärke vorgegebene Wert überschritten wird, so wird an den Schalter 8 das Signal "Öffnen" gesendet. Der zweite Schalter 9 ist in dieser Situation geschlossen. Der Strom fließt dann über den Widerstand 10.

Der Controller 11 verfügt außerdem über einen Eingang 15, an den eine nicht dargestellte Messeinrichtung zur Messung der Klemmenspannung der Batterie 1 angeschlossen ist. Über- oder unterschreitet die Klemmenspannung vorgegebene, Grenzwerte, so steuert der Controller 11 den Schalter 8 und / oder den Schalter 9 an, um diese nach Bedarf zu öffnen oder zu schließen.

Im Folgenden werden die unterschiedlichen Funktionen der erfindungsgemäßen Sicherheitsschaltung am Beispiel einer aus Lithium-Mangan-Zellen 5 aufgebauten Batterie 1 mit 37 V Nennspannung und einer Kapazität von 58 Ah erläutert. In der Batterie 1 sind je 10 Lithium-Mangan-Zellen 5 in Serie und 36 Zellen 5 parallel geschaltet. Die Ladeendspannung dieser Batterie 1 beträgt 42V.

Beim Laden der Batterie 1 wird das Ladegerät an die Pole 2, 3 angeschlossen und der Ladevorgang gestartet Der Schalter 8 ist in dieser Phase geschlossen, so dass der Ladestrom über die Zellen 4 fließen kann. Über den Eingang 15 erfasst der Controller 11 ständig die aktuelle Klemmenspannung der Batterie 1. Wird die Ladeendspannung von 42 V erreicht, sendet der Controller 11 ein Signal an die Schalter 8 und 9, so dass diese geöffnet werden und damit der Ladevorgang abgebrochen wird.

Im normalen Betrieb ist an die Pole 2, 3 der Batterie 1 ein Stromverbraucher angeschlossen. Mit zunehmender Entladung der Batterie 1 sinkt auch deren Klemmenspannung ab. Die Klemmenspannung wird wiederum von dem Controller 11 überwacht. Fällt die Spannung unter 20 V, das heißt die Spannung der einzelnen Zellen 4 unterschreitet 2,0 V, so werden die Schalter 8 und 9 geöffnet und die Batterie 1 abgeklemmt, um eine Schädigung der Zellen 4 zu verhindern.

Wird die Batterie 1 im teilentladenen Zustand in unsachgemäßer Weise mit einer voll geladenen Batterie gleichen Typs parallel geschaltet, so fließt aufgrund der unterschiedlichen Klemmenspannung beider Batterien ein Ausgleichsstrom. Die Batterie 1 könnte beispielsweise eine Klemmenspannung von 27 V aufweisen, während die andere Batterie im geladenen Zustand die Nennspannung von 37 V besitzt. Ohne die erfindungsgemäße Sicherheitsschaltung könnte in dieser Situation ein Ausgleichsstrom von bis zu 10000 A fließen, da der Innenwiderstand der Batterien nur etwa 1 mOhm beträgt. Erfindungsgemäß wird dagegen von der Messeinrichtung 7 der hohe Stromfluss registriert und an den Controller 11 übermittelt. Controller 11 sendet sofort ein Signal an den Schalter 8, um diesen zu öffnen Der Ausgleichsstrom fließt dann über den parallelen Zweig mit dem Schalter 9 und dem Widerstand 10. Der Widerstand 10 hat zum Beispiel einen Widerstand von 100 Ohm, wodurch der Ausgleichsstrom auf 100 mA begrenzt wird.

## Patentansprüche

1. Batterie mit mehreren in Serie und / oder parallel geschalteten Batteriezellen (4) und mit zwei Batteriepolen (2, 3), **dadurch gekennzeichnet, dass** eine Sicherheitsschaltung (6, 7, 8, 9, 10, 11) vorgesehen ist, welche einen Widerstand (10) aufweist, der in die stromleitende Verbindung zwischen den Batteriezellen (4) und einem der Batteriepole (2, 3) schaltbar ist.

2. Batterie nach Anspruch 1, **dadurch gekennzeichnet, dass** die Batteriezellen (4) als Lithium-Zellen, vorzugsweise als Lithium-Mangan-Zellen, ausgeführt sind.

3. Batterie nach einem der Ansprüche 1 oder 2, **dadurch gekennzeichnet, dass** zwischen 4 und 12 Lithium-Mangan-Zellen in Serie und / oder mehr als 10 Lithium-Mangan-Zellen parallel geschaltet sind.

4. Batterie nach einem der Ansprüche 1 bis 3, **dadurch gekennzeichnet, dass** in der Verbindung zwischen den Batteriezellen (4) und einem der Batteriepole (2, 3) ein Schalter vorgesehen ist der Widerstand parallel zu dem Schalter geschaltet ist.

5. Batterie nach einem der Ansprüche 1 bis 4, **dadurch gekennzeichnet, dass** die Sicherheitsschaltung einen Schalter (8, 9), eine Einrichtung (6, 7) zur Strom- und /oder Spannungsmessung und eine Steuereinrichtung (11) umfasst.

6. Batterie nach Anspruch 5, **dadurch gekennzeichnet, dass** der Schalter (8, 9) in der Verbindung zwischen dem Pluspol (2) der Batterie (1) und den Batteriezellen (4) angeordnet ist

7. Verwendung einer Batterie nach einem der Ansprüche 1 bis 6 als Stromversorgung für ein Elektroboot.

8. Verfahren zum Parallelschalten von zwei oder mehr Batterien nach einem der Ansprüche 1 bis 6, **dadurch gekennzeichnet, dass** der Widerstand (10) in die stromleitende Verbindung zwischen den Batteriezellen (4) und einem der Batteriepole (2, 3) geschaltet wird, wenn die Batterien unterschiedliche Klemmenspannungen aufweisen.

9. Verfahren zum In-Reihe-Schalten von zwei oder mehr Batterien nach einem der Ansprüche 1 bis 6, **dadurch gekennzeichnet, dass** die stromleitende Verbuindung zwischen den Batteriezellen (4) und einem der Batteriepole (2, 3) unterbrochen wird, wenn die Klemmenspannung der Batterie unter einen vorgegebenen Wert fällt.
